Europäisches Patentamt

European Patent Office

Office européen des brevets

(19)

(11) **EP 1 010 729 B1**

(12) **FASCICULE DE BREVET EUROPEEN**

(45) Date de publication et mention
de la délivrance du brevet:
**13.10.2004 Bulletin 2004/42**

(51) Int Cl.⁷: **C08L 95/00**
// (C08L95/00, 95:00, 57:02)

(21) Numéro de dépôt: **99403070.8**

(22) Date de dépôt: **08.12.1999**

(54) **Liants bitumineux modifiés à haute cohésion et leurs utilisations**

Modifizierte Bitumenbindemittel mit hoher Kohäsion und ihre Verwendung

Modified bitumous binders having high cohesion and their applications

(84) Etats contractants désignés:
**AT BE CH CY DE DK ES FI FR GB GR IE IT LI LU
MC NL PT SE**

(30) Priorité: **15.12.1998 FR 9815823**

(43) Date de publication de la demande:
**21.06.2000 Bulletin 2000/25**

(73) Titulaire: **TotalFinaElf France
92800 Puteaux (FR)**

(72) Inventeurs:
• **Malot, Michel
76210 Bolbec (FR)**
• **Jolivet, Yannick
76600 Le Havre (FR)**
• **Debris, Georges
76610 Le Havre (FR)**

(74) Mandataire: **Jolly, Jean-Pierre et al
Cabinet Jolly
54, rue de Clichy
75009 Paris (FR)**

(56) Documents cités:
**EP-A- 0 458 386        EP-A- 0 645 433
EP-A- 0 728 815        FR-A- 2 643 643**

**Description**

La présente invention concerne des liants bitumineux modifiés sous forme de compositions bitume-polymère, présentant une cohésion élevée, et leur utilisation dans l'industrie routière et dans d'autres types d'industrie.

Le bitume est un matériau dont le comportement rhéologique est de type viscoélastique: de caractère visqueux pour les temps de charge longs et les températures élevées, il se ramollit et peut fluer; de caractère élastique marqué pour les temps de charge courts et les basses températures, il tend à devenir dur et fragile.

Sa sensibilité à la température varie selon son origine et son procédé de fabrication.

Il peut être obtenu, notamment, à partir du pétrole brut, comme résidu de distillation de celui-ci et/ou comme brai de désasphaltage de la fraction lourde issue de la (ou les) distillation(s). Le bitume est constitué, selon l'origine du pétrole brut, de proportions variables d'huiles saturées (aliphatiques ou naphténiques), aromatiques et de résines, appelées maltènes et d'asphaltènes ; il se présente sous la forme d'une suspension colloïdale, où la phase dispersée des asphaltènes est recouverte d'une couche de résines polaires formant des micelles immergées dans une phase continue huile (pour plus de détails, on peut se reporter au brevet EP 246 956, dont la Demanderesse est titulaire).

La morphologie des asphaltènes et leur teneur, ainsi que la constitution chimique des maltènes, conditionnent les propriétés physico-chimiques et rhéologiques des bitumes.

L'agressivité croissante du trafic des poids lourds se traduit par le besoin de disposer de liants bitumineux routiers de plus en plus performants vis-à-vis de l'orniérage et des contraintes tangentielles (dans les zones fortement sollicitées en cisaillement, telles que, notamment, les abords de péages, les zones giratoires, les virages, les rampes).

Il est bien connu de modifier le bitume par addition d'au moins un polymère, en vue d'améliorer ses performances. L'addition d'au moins un polymère au bitume a pour objectifs :

- d'accroître le domaine de viscoélasticité du liant,
- de diminuer la susceptibilité thermique des bitumes, en élargissant l'intervalle de plasticité (par augmentation de la température de ramollissement et/ou par diminution de la température de fragilité à froid),
- d'augmenter la résistance au fluage, ainsi que le seuil de rupture.

Il a ainsi été prouvé que les performances d'une composition bitume-polymère dûment sélectionnée sont supérieures à celles d'un bitume non additionné de polymère.

Deux familles de polymères thermoplastiques sont classiquement utilisées: les élastomères (par exemple SBS: copolymère styrène-butadiène-styrène, SBR: copolymère styrène-butadiène) et les plastomères (notamment EVA: copolymère éthylène-acétate de vinyle). Cependant, les problèmes de compatibilité des composants polymère et bitume pour atteindre le meilleur compromis entre les performances d'usage et la stabilité au stockage sont très difficiles à résoudre. La compatibilité est gouvernée par de nombreux paramètres, tels que l'énergie de cohésion des maltènes et du polymère (paramètre de solubilité), la concentration et la structure des asphaltènes, l'aromaticité des maltènes, le taux, la macrotexture et la masse moléculaire du polymère.

Le mécanisme de solubilité repose sur le gonflement du polymère par absorption plus ou moins importante de fractions de maltènes; en absorbant des huiles, le polymère, qui est en compétition avec les asphaltènes, provoque une modification du système colloïdal.

Aux faibles teneurs en polymère (inférieures à environ 5% en poids, par rapport au mélange bitume-polymère), le bitume constitue en général la phase continue, tandis que pour des taux supérieurs à 5-6 %, le polymère devient la phase continue, et que autour de 5 % les deux phases continues sont entremêlées, ces valeurs types dépendant toutefois fortement du couple bitume-polymère.

C'est pourquoi de nombreux brevets revendiquent des compositions et/ou des procédés pour les obtenir, qui sont censés apporter des solutions à ces problèmes.

C'est ainsi que la demande de brevet européen EP 458 386 revendique un procédé pour obtenir une composition bitume-polymère stable dans les conditions de fluidité existant pendant le stockage à chaud, qui consiste à mélanger à une température comprise entre 200 et 250 °C et pendant une durée (dépendant de la température) comprise entre 45 minutes et 15 heures :

- de 85 à 98 % en poids de bitume sélectionné parmi les bitumes qui ont une pénétrabilité comprise entre 30 et 220 dixièmes de mm à 25°C, un point de ramollissement compris entre 35 et 55 °C, et un indice de pénétrabilité compris entre -1,5 et +1,5, et
- de 15 à 2% en poids d'un copolymère "styrène-butadiène-styrène" (dit SBS) séquencé, ayant une structure étoilée ou linéaire.

Les caractéristiques mentionnées ci-dessus, ainsi que dans la suite de la présente description et dans les revendications annexées, répondent aux normes suivantes :

- pénétrabilité : norme NFT 66-004,
- indice de pénétrabilité : méthode du L.C.P.C. (Laboratoire Central des Ponts et Chaussées),
- point de ramollissement ou température bille-anneau : norme NFT 66-008,
- cohésion : norme française T 66-037 (essai de cohésion au mouton pendule),
- viscosité cinématique, mesurée à 100°C ou à 170°C : norme ASTM D2170.

Pour les raisons qui apparaîtront ci-après, le procédé décrit dans EP 458 386 ne permet cependant pas d'obtenir de façon systématique des compositions bitume-polymère stables au stockage et ayant une bonne tenue à la température: en effet, le fait d'utiliser 85 à 98 % en poids de bitume sélectionné parmi les bitumes qui ont une pénétrabilité comprise entre 30 et 220 dixièmes de mm à 25°C, un point de ramollissement compris entre 35 et 55 °C et un indice de pénétrabilité compris entre -1,5 et +1,5, n'apporte pas l'assurance d'obtenir de manière certaine et à partir de n'importe quel bitume des compositions bitume-polymère stables au stockage.

Au cours de ses travaux dans le domaine, la Demanderesse a mis en évidence, dans le brevet FR 2 729 672, le fait que, d'une façon surprenante, une teneur minimale en composés aromatiques dans la composition bitume-polymère, ainsi qu'un rapport particulier de la teneur en composés aromatiques à la teneur en polymère confèrent à ladite composition des propriétés de stabilité au stockage et de bonne tenue à froid.

Toutefois, les niveaux de cohésivité obtenus par ces liants restent insuffisants pour des applications où est recherchée une très forte résistance des revêtements aux contraintes tangentielles.

Le but de la présente invention est donc l'obtention de liants bitume-polymère ayant des propriétés de cohésivité améliorées par rapport aux liants bitume-polymère usuels, tout en étant stables au stockage.

De façon surprenante, la Demanderesse a établi qu'un fort pouvoir cohésif des liants, significativement plus élevé que celui de nombreux liants modifiés traditionnels, est associé à l'obtention d'une phase continue polymère (appelée aussi " inversion de phase "), qui est fortement influencée par la teneur en asphaltènes du bitume ainsi que par la nature de ceux-ci.

A cet effet, l'invention a pour objet un liant bitumineux modifié par des polymères, à haute cohésion, comprenant comme constituants de base une base dure constituée d'une base bitume en mélange avec une coupe hydrocarbonée à haute viscosité, et une base molle aromatique, caractérisé en ce que ce liant est modifié par un polymère du type SBS, incorporé à un taux compris entre 3 et 6 % en poids par rapport au poids total des constituants de base, et en ce qu'il présente une cohésion maximale (mesurée selon la norme T 66-037) comprise entre 1,8 et 2,6 J/cm$^2$.

En particulier, le liant bitumineux modifié se présente sous la forme d'une phase continue polymérique pour un taux d'incorporation du polymère d'au moins 5 % en poids.

Selon un mode de réalisation préféré, le liant bitumineux modifié possède une pénétrabilité à 25°C comprise entre 40 et 70 dixièmes de mm, et une température "bille-anneau" (TBA) comprise entre 70 et 100 °C.

De préférence, la base dure présente une teneur en asphaltènes d'au moins 10 % en poids et une teneur en carbones aromatiques protonés d'au moins 13% en poids par rapport à la totalité des carbones.

Plus particulièrement, la base bitume a une pénétrabilité à 25°C comprise entre 0 et 20 dixièmes de mm.

De préférence, la coupe hydrocarbonée à haute viscosité a une viscosité cinématique mesurée à 170°C comprise entre 20 et 2000 mm$^2$/s et est incorporée suivant un rapport coupe hydrocarbonée/base bitume de 70/30 en poids.

La base molle aromatique a une viscosité cinématique à 100°C qui est comprise entre 17 et 85 mm$^2$/s, et est incorporée à un taux d'au moins 31 % en poids par rapport au poids total des constituants de base.

Un autre objet de l'invention est l'utilisation du liant bitumineux modifié selon l'invention, dans la formulation d'enrobés à chaud pour les couches de roulement minces, très minces ou ultra minces, et dans la formulation d'enrobés drainants, notamment à hautes teneurs en vide.

Une autre utilisation du liant bitumineux modifié selon l'invention réside dans la formulation des émulsions employées dans les enrobés à froid, dans les couches d'accrochage ou dans la formulation des enduits superficiels sous forme d'émulsions ou de liants anhydres (composés d'un bitume et d'un fluxant).

Enfin, ce liant bitumineux trouve aussi une utilisation dans des applications industrielles pour les chapes d'étanchéité, les peintures ou l'inertage des déchets.

Les liants modifiés selon l'invention, sont particulièrement préconisés pour les couches de roulement en enrobés minces : BBM(béton bitumineux mince), BBTM(béton bitumineux très mince), BBUM(béton bitumineux ultra mince) et en enrobés drainants :BBd (béton bitumineux drainant) à haute teneur en vides, pour lesquels la pérennité est étroitement liée à la cohésion. Ces couches sont maintenant largement utilisées sur routes à forts trafics et chaussées autoroutières, qui sont, de par leur conception et leurs épaisseurs, particulièrement sollicitées par les contraintes tangentielles, dont les effets peuvent se manifester par des arrachements en période hivernale et des rejets ou des réarrangements de granulats en période estivale.

Dans les enrobés, qui sont des milieux granulaires, la cohésion dépend du squelette minéral (micro-rugosité, forme, composition...) et du liant qui assure avec les fines la soudure entre les grains.

Le choix judicieux des bases et des conditions de fabrication confère à ces liants modifiés par des polymères un bon comportement rhéologique aux températures de service, garantissant aux enrobés une bonne résistance à la fatigue, à la fissuration thermique, à l'orniérage et une forte cohésion sur une large plage de températures, qui permet de limiter fortement l'endommagement des enrobés drainants et de conserver une macrotexture suffisante aux enrobés très minces, compatible avec les exigences en matière d'adhérence.

Pour les sites les plus sévères, le liant à 5 % de SBS, qui offre la meilleure cohésion grâce à une phase polymère continue, est particulièrement indiqué.

Les conditions d'utilisation sont classiques pour l'enrobage et facilitées par la stabilité au stockage de ces liants.

Parmi les travaux réalisés dans le cadre de l'invention, il a été montré que la modification de bitumes 70/100 et 60/80 à base de brai, d'une coupe hydrocarbonée à haute viscosité et d'une base molle aromatique, par du SBS (par exemple F411 et F416 de la Société FINA), permet l'obtention de liants présentant des niveaux de cohésivité supérieurs à la plupart des bitumes modifiés du marché.

Parmi les divers constituants pouvant être utilisés, on peut noter :

- des coupes hydrocarbonées à haute viscosité, ayant des viscosités cinématiques à 170°C qui sont comprises de préférence entre 100 et 800 mm$^2$/s,
- des brais divers de consistances différentes (pénétrabilité à 25°C: entre 0 et 20 dixièmes de mm),
- des bases aromatiques (pouvant être obtenues par extraction au solvant d'une base huile), ayant une viscosité cinématique à 100°C, de 17 à 100 mm$^2$/s.

Ces liants se trouvent être bien adaptés aussi pour les techniques à chaud (enrobés), les techniques à froid (enduits superficiels et enrobés à froid) et les couches d'accrochage.

Cette performance de cohésion est un atout, lorsqu'il y a recherche d'une forte résistance aux contraintes tangentielles des enrobés (BBUM, BBTM, BBM, BB drainants).

Outre ces particularités, ces liants thermiquement peu susceptibles offrent de bonnes résistances à l'orniérage.

Par ailleurs, les connaissances acquises lors de cette étude permettent de proposer un bitume adapté pour la fabrication de liant utilisé comme couche antiremontée de fissures.

Comparativement à la fabrication de bitumes/SBS classiques, les températures et durées de mélange ont été abaissées en prenant comme indicateur les morphologies de la phase polymère observable par microscopie à fluorescence UV.

Ce mode d'observation, rapide et pertinent, semble bien adapté aux contrôles de fabrication en laboratoire et en industrie.

Ainsi, ces liants à haute cohésion sont bien adaptés pour formuler des couches de roulement en enrobés minces (1,5 à 4 cm) et/ ou en enrobés drainants à hautes teneurs en vides, pour lesquels la pérennité est étroitement liée à la cohésion, dans les zones fortement sollicitées en cisaillement telles que citées ci-dessus.

Exemples de réalisation

Divers exemples comparatifs, mettant en évidence les avantages de l'invention, vont maintenant être décrits.

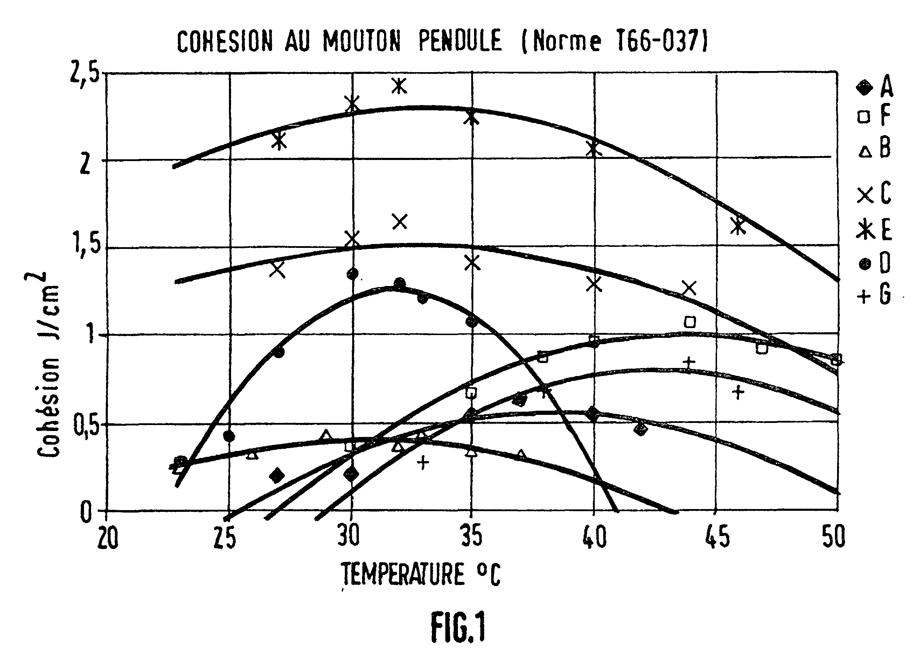

Dans ces exemples, on se réfèrera aux dessins annexés, sur lesquels les Figures 1, 2 et 3 sont des diagrammes illustrant les résultats des essais effectués, qui seront décrits plus en détail ci-après.

Différents liants référencés de A à G ont été utilisés pour formuler les deux types d'enrobés (enrobés minces et enrobés drainants).

Les liants A et B sont des bitumes purs de grade 50/70 (pénétrabilité à 25 °C selon la norme NFT 66-004), obtenus par mélange d'une base molle et d'une base dure.

Le liant C est un mélange d'un bitume de grade 70/100, obtenu par mélange d'une base molle et d'une base dure et de 5% en poids d'un polymère SBS de type F411 de la Société FINA.

Le liant D est un mélange du même bitume que pour C, avec 3 % en poids du polymère SBS de type F411.

Le liant E est le liant selon l'invention; il comprend un bitume de grade 70/100 obtenu par addition de 69 % en poids d'une base dure constituée d'un mélange suivant le rapport 30/70 en poids d'une base bitume de pénétrabilité comprise entre 0 et 20 et d'une coupe hydrocarbonée ayant une viscosité cinématique à 170 °C de 650 mm$^2$/s, et de 31 % en poids d'une base molle aromatique , ayant une viscosité cinématique à 100°C de 69 mm$^2$/s ; à ce bitume est ajouté 5% en poids du même polymère SES de type F411.

Le liant F est un mélange d'un bitume de grade 70/100 et de 8% en poids d'un polyéthylène haute densité dégradé.

Enfin, le liant G est obtenu par mélange d'un bitume de grade 70/100 avec 3 % en poids d'un copolymère éthylène acétate de vinyle de type EVATANE de la Société ATOCHEM.

Les caractéristiques classiques de ces liants, comme la pénétrabilité mesurée selon la norme NFT 66-004, le point de ramollissement(ou température " Bille-anneau ") mesuré selon la norme NFT 66-008, ainsi que leur cohésion maximale $C_M$ à la température $T_M$, correspondant au maximum de la courbe de variation de la cohésion en fonction de la température, comme représenté sur la figure 1 annexée, et leur cohésion $C_{35}$ à T=35°C, mesurées selon la norme T 66-037 (essai de cohésion au mouton pendule), sont représentées dans le Tableau 1 ci-après.

Tableau 1

| Caractéristiques | A | B | C | D | E | F | G |
|---|---|---|---|---|---|---|---|
| Pénétrabilité à 25 °C (1/10 mm) | 70 | 70 | 56 | 51 | 52 | 35 | 70 |
| Point de ramollissement (TBA) (°C) | 48 | 45 | 76,5 | 70 | 92,5 | 82 | 53,5 |
| Phase continue | Bitume | Bitume | Bitume | Bitume | SBS | Bitume | Bitume |
| $C_M$ (J/cm$^2$)<br>$T_M$ (°C) | 0,62<br>37 | 0,44<br>29 | 1,64<br>32 | 1,34<br>30 | 2,4<br>32 | 1,0<br>44 | 0,9<br>40 |
| $C_{35}$ à 35°C (J/cm$^2$) | 0,54 | 0,33 | 1,4 | 1,06 | 2,24 | 0,66 | 0,4 |

La figure 1 annexée, représente les variations de la cohésion en fonction de la température, pour les différents liants étudiés; on constate, en particulier, les valeurs nettement plus élevées obtenues avec le liant E, selon l'invention.

Les essais de stabilité au stockage pratiqués à 165°C sur le liant E pendant 4 jours ont confirmé que la faible décantation du polymère permet de s'affranchir pendant un délai raisonnable d'un système d'agitation dans les cuves de stockage.

En outre, pour le liant E à 5 % de SBS, les photos de microscopie à fluorescence UV montrent l'obtention d'une phase continue polymère.

Des analyses complémentaires ont été réalisées sur différentes bases bitumes, dont certaines de celles utilisées ci-dessus, selon le protocole opératoire suivant:

- première étape : désasphaltage des échantillons de bitume par précipitation au solvant n-heptane, filtration et pesée des asphaltènes, selon la méthode interne TOTAL 626/81,
- deuxième étape : analyse des asphaltènes obtenus, par RMN $^{13}$C, selon la méthode interne TOTAL 864/99, des motifs structuraux hydrocarbonés, qui permet de déterminer le pourcentage en carbones saturés et le pourcentage en carbones aromatiques, ce dernier se décomposant à son tour en carbones aromatiques quaternaires et en carbones aromatiques protonés (carbones des noyaux aromatiques possédant un atome d'hydrogène).

Les compositions des bases bitumes étudiées sont les suivantes:

1) un mélange d'une base molle et d'une base dure d'un brut Vénézuélien,

2) un bitume de grade 70/100, obtenu par mélange d'une base dure et d'une base molle (similaire à la base bitume du liant C ci-dessus),

3) un bitume de grade 35/50,

4) à 8) des compositions selon l'invention, comprenant une base bitume de grade 70/100 obtenue par addition de 65 % en poids d'un mélange 30/70 en poids d'un brai de grade 0/20 et d'une coupe hydrocarbonée ayant une viscosité cinématique à 170 °C respectivement de 715, 280, 244, 290 et 300 mm$^2$/s), et de 35 % en poids d'une base aromatique obtenue par extraction au solvant d'une coupe hydrocarbonée, ayant une viscosité cinématique à 100°C de 69 mm$^2$/s.

Les résultats des analyses sont indiqués dans le Tableau 2, ci-après :

Tableau 2

| Bases bitumes | Asphaltènes (%) | C quaternaires aromatiques (%) | C aromatiques protonés (%) | Total C aromatiques (%) |
|---|---|---|---|---|
| 1 | 16,0 | 38,4 | 11,3 | 49,7 |
| 2 | 16,0 | 42,6 | 11,6 | 54,2 |
| 3 | 5,4 | 36,7 | 9,2 | 45,9 |

Tableau 2   (suite)

| Bases bitumes | Asphaltènes (%) | C quaternaires aromatiques (%) | C aromatiques protonés (%) | Total C aromatiques (%) |
|---|---|---|---|---|
| 4 | 18,7 | 41,4 | 20,2 | 61,6 |
| 5 | 18,8 | 50,2 | 14,5 | 64,7 |
| 6 | 18,6 | 46,6 | 15,9 | 62,5 |
| 7 | 20,3 | 50,7 | 14,1 | 64,8 |
| 8 | 18,6 | 50,9 | 14 | 64,9 |

Les valeurs obtenues montrent que la teneur en carbones aromatiques protonés se situe, pour les bases bitumes selon l'invention, à un taux d'au moins 13%, de préférence au moins 14%, par rapport à la totalité des carbones, ces bases bitumes ayant un taux d'asphaltènes d'au moins 10 % en poids, en particulier d'au moins 18%.

Par ailleurs, une autre série d'essais a permis d'évaluer la relation qui existe entre la cohésion des différents liants étudiés ci-dessus et les comportements d'enrobés drainants ou bétons bitumineux drainants (BBd), incorporant ces liants et répondant à la norme NFP 98-134, sur le manège TOTAL, simulateur de trafic lourd.

Le principe de ce dernier est simple: une roue, chargée et constamment freinée, circule sur une piste circulaire, sur laquelle est disposée une éprouvette d'enrobé.

Conditions opératoires :

- diamètre de la roue d'essai : 0,4 m,
- charge du pneu : 3 kN,
- vitesse de rotation de la roue : 12 km/h,
- couple de freinage : 11± 1 daN.m,
- température ambiante : 25 ± 1 °C,
- température de surface : 35 ± 1 °C.

Les BBd sont testés dans leur épaisseur classique de mise en oeuvre, soit 4 cm, posés sur enrobés 0/10 semi-grenu, avec couche d'accrochage dosée à 350g/m$^2$ de liant résiduel.

Les éprouvettes sont fabriquées au compacteur à pneus LCPC (Laboratoire Central des Ponts et Chaussées); pour les enrobés drainants, le plan de compactage est adapté pour obtenir un niveau de compacité voisin de la valeur C40 (essai à la presse à cisaillement giratoire).

Le résultat des essais est exprimé en poids de granulats arrachés en fonction du nombre de cycles; les pertes de poids des plaques d'enrobés, pour les différents liants, sont indiquées dans le Tableau 3, ci-dessous :

Tableau 3

| Nombre de cycles | Perte de masse en g | | | | | | |
|---|---|---|---|---|---|---|---|
| | A | B | C | D | E | F | G |
| 100 | 110 | 200 | 0 | 50 | 0 | 0 | 30 |
| 200 | 340 | 405 | 0 | 120 | 0 | 60 | 60 |
| 400 | 462 | 510 | 30 | 200 | 0 | 190 | 400 |
| 1000 | 1100 | 1200 | 140 | 430 | 0 | 610 | 1000 |
| 1500 | 1925 | * | 190 | 585 | 0 | 690 | * |
| 2000 | * | | 230 | 780 | 0 | 850 | |
| 3000 | | | 360 | 1000 | 0 | 1200 | |
| 4000 | | | 540 | 1250 | 20 | 1500 | |

* destruction de l'éprouvette

Pour tenir compte des conditions opératoires sur le manège TOTAL, qui fixent à 35°C la température de surface des enrobés, les cohésions des liants à 35 °C, C35, ont été considérées, en retenant successivement les endommagements à 1000 puis à 4000 cycles.

L'exploitation des résultats obtenus avec les différents liants permet de dégager une relation entre l'endommagement des enrobés et la cohésion, de la forme : lg R = aj $C_{35}$ + bj (R exprimant le rejet ou perte de masse de granulats en g), où lg désigne le logarithme décimal.

Bien qu'établie avec seulement six valeurs, le liant E selon l'invention étant exclu, compte tenu de la valeur très élevée de sa cohésion (2,24 J/cm$^2$) et de l'absence de rejets après 1000 cycles, la quantité de granulats arrachés après 1000 cycles se relie à la cohésion du liant par l'équation :

$$lg\ R = -0,825\ C_{35} + 3,384,$$

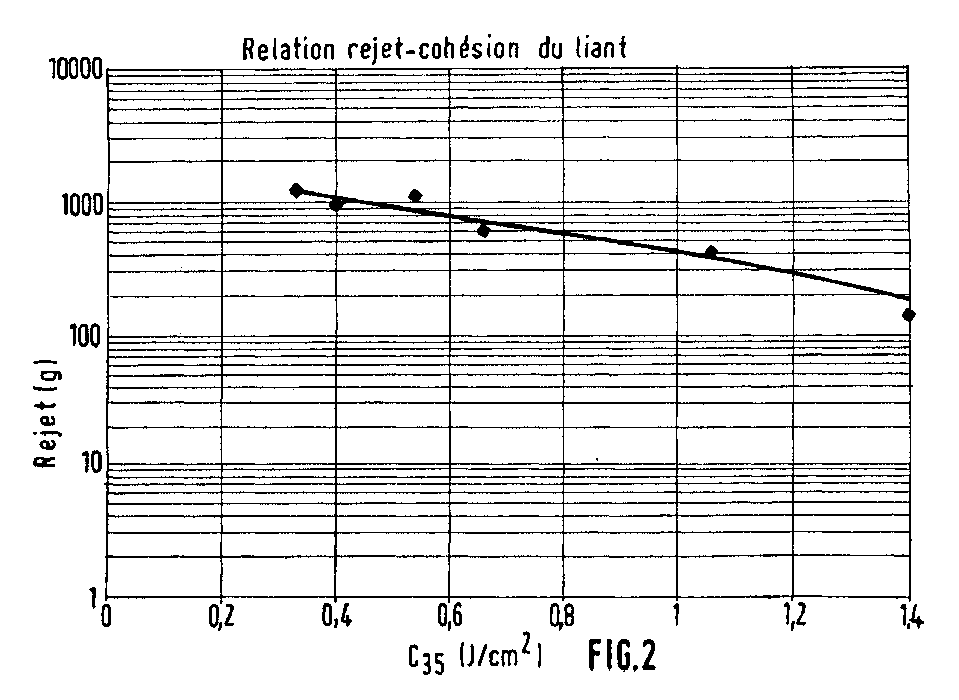

avec un coefficient de corrélation r = 0,97, comme le montre le graphique de la Figure 2.

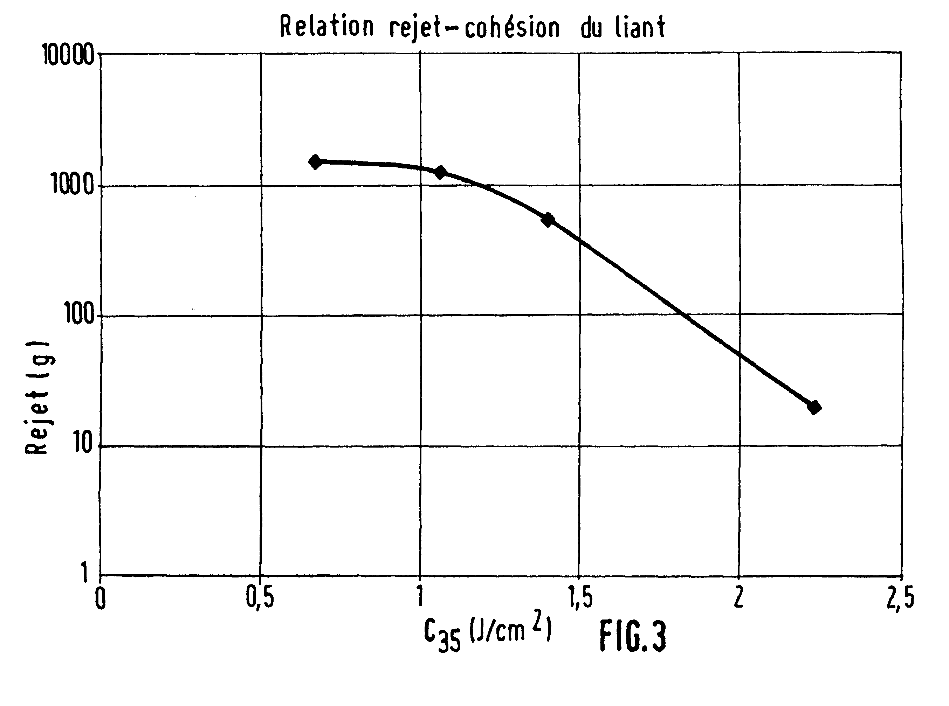

Tracée à 4000 cycles, la courbe de tendance R=f (C35), pour les liants C, D, E et F, comme illustrée sur la figure 3, semble également suivre une loi semi - logarithmique.

La perte de poids traduisant l'arrachement des granulats du BBd s'est donc révélée un indicateur d'endommagement pertinent.

Ces résultats, qui confirment, pour une formulation donnée d'enrobés, la forte dépendance de la résistance desdits enrobés au cisaillement de surface en période estivale et de la vitesse d'endommagement vis-à-vis de la cohésion du liant, montrent nettement le caractère hautement cohésif du liant E selon l'invention, sur une large plage de température.

D'autres essais, réalisés sur des Bétons Bitumineux très minces (BBTM), ont montré que la haute cohésion du liant modifié E permet de conserver une macrotexture suffisante à ces revêtements, compatible avec les exigences en matière d'adhérence.

**Revendications**

1. Liant bitumineux modifié par des polymères, à haute cohésion, comprenant comme constituants de base une base dure constituée d'une base bitume en mélange avec une coupe hydrocarbonée à haute viscosité, et une base molle aromatique, **caractérisé en ce que** ce liant est modifié par un polymère du type SES, incorporé à un taux compris entre 3 et 6 % en poids par rapport au poids total des constituants de base, et **en ce qu'**il présente une cohésion maximale, mesurée selon la norme française T 66-037, comprise entre 1,8 et 2,6 J/cm$^2$.

2. Liant bitumineux modifié selon la revendication 1, **caractérisé en ce qu'**il se présente sous la forme d'une phase continue polymérique pour un taux d'incorporation du polymère d'au moins 5 % en poids.

3. Liant bitumineux modifié selon l'une des revendications 1 et 2, **caractérisé en ce qu'**il possède une pénétrabilité à 25 °C comprise entre 40 et 70 dixièmes de mm, et une température "bille-anneau" (TBA ) comprise entre 70 et 100 °C.

4. Liant bitumineux modifié selon l'une des revendications 1 à 3, **caractérisé en ce que** la base dure présente une teneur en asphaltènes d'au moins 10 % en poids et une teneur en carbones aromatiques protonés d'au moins 13 % en poids par rapport à la totalité des carbones.

5. Liant bitumineux modifié selon l'une des revendications 1 à 4, **caractérisé en ce que** la base bitume a une pénétrabilité à 25 °C comprise entre 0 et 20 dixièmes de mm.

6. Liant bitumineux modifié selon l'une des revendications 1 à 5, **caractérisé en ce que** la coupe hydrocarbonée à haute viscosité a une viscosité cinématique mesurée à 170°C comprise entre 20 et 2000 mm$^2$/s, de préférence entre 100 et 1200 mm$^2$/s, et est incorporée suivant un rapport coupe hydrocarbonée/base bitume de 70/30 en poids.

7. Liant bitumineux modifié selon l'une des revendications 1 à 6, **caractérisé en ce que** la base molle aromatique a une viscosité cinématique à 100°C comprise entre 17 et 85 mm$^2$/s, et est incorporée à un taux d'au moins 31 % en poids par rapport au poids total des constituants de base.

8. Utilisation du liant bitumineux modifié selon l'une des revendications 1 à 7, dans la formulation d'enrobés à chaud pour les couches de roulement minces, très minces ou ultra minces, et dans la formulation des enrobés drainants, notamment à hautes teneurs en vide.

**9.** Utilisation du liant bitumineux modifié selon l'une des revendications 1 à 7, dans la formulation des émulsions employées dans les enrobés à froid, dans les couches d'accrochage ou dans la formulation des enduits superficiels sous forme d'émulsions ou de liants anhydres.

**10.** Utilisation du liant bitumineux modifié selon l'une des revendications 1 à 7, dans des applications industrielles pour les chapes d'étanchéité, les peintures ou l'inertage des déchets.

**Patentansprüche**

**1.** Durch Polymere modifizierte Bitumenbindemittel mit hoher Kohäsion, umfassend als Grundbestandteile eine harte Basis, die sich aus einer Bitumenbasis in Mischung mit einem Kohlenwasserstoffverschnitt mit hoher Viskosität zusammensetzt, sowie eine weiche aromatische Basis, **dadurch gekennzeichnet, daß** das Bindemittel durch ein Polymer vom Typ SBS modifiziert ist, welches bei einem Prozentsatz von zwischen einschließlich 3 und 6 Gew.-%, bezogen auf das Gesamtgewicht der Bestandteile der Basis, eingebracht ist, und daß es eine maximale Kohäsion, gemessen gemäß der französischen Norm T 66-037, zwischen einschließlich 1,8 und 2,6 J/cm$^2$ zeigt.

**2.** Modifiziertes Bitumenbindemittel gemäß Anspruch 1, **dadurch gekennzeichnet, daß** es unter der Form einer kontinuierlichen Polymerphase einen Einbringprozentsatz des Polymeren von mindestens 5 Gew.-% zeigt.

**3.** Modifiziertes Bitumenbindemittel gemäß einem der Ansprüche 1 und 2, **dadurch gekennzeichnet, daß** es eine Durchdringbarkeit bei 25°C von zwischen einschließlich 40 und 70 Zehntel mm sowie eine "Kugel-Ring"-Temperatur (TBA) von zwischen einschließlich 70 und 100°C besitzt.

**4.** Modifiziertes Bitumenbindemittel gemäß einem der Ansprüche 1 bis 3, **dadurch gekennzeichnet, daß** die harte Basis einen Asphaltgehalt von mindestens 10 Gew.-% und einen Gehalt an protonierten aromatischen Kohlenstoffen von mindestens 13 Gew.-%, bezogen auf die Gesamtheit von Kohlenstoff, zeigt.

**5.** Modifiziertes Bitumenbindemittel gemäß einem der Ansprüche 1 bis 4, **dadurch gekennzeichnet, daß** die Bitumenbasis eine Durchdringbarkeit bei 25°C von zwischen einschließlich 0 und 20 Zehntel mm aufweist.

**6.** Modifiziertes Bitumenbindemittel gemäß einem der Ansprüche 1 bis 5, **dadurch gekennzeichnet, daß** der Kohlenwasserstoffverschnitt mit hoher Viskosität eine bei 170°C gemessene, kinematische Viskosität von zwischen einschließlich 20 und 2.000 mm$^2$/s, vorzugsweise zwischen 100 und 1.200 mm$^2$/s aufweist und einem Gewichtsverhältnis von Kohlenwasserstoffverschnitt/Bitumenbasis von 70/30 folgend eingebracht ist.

**7.** Modifiziertes Bitumenbindemittel gemäß einem der Ansprüche 1 bis 6, **dadurch gekennzeichnet, daß** die weiche aromatische Basis eine kinematische Viskosität bei 100°C von zwischen einschließlich 17 und 85 mm$^2$/s aufweist und bei einem Prozentsatz von mindestens 31 Gew.-% im Verhältnis zum Gesamtgewicht der Bestandteile der Basis eingebracht ist.

**8.** Verwendung des modifizierten Bitumenbindemittels gemäß einem der Ansprüche 1 bis 7 in einer warmen Mischgutformulierung für dünne, sehr dünne oder ultradünne Rollschichten, und in einer Formulierung von Drainage-Mischgütern, insbesondere mit hohen Hohlraumgehalten.

**9.** Verwendung des modifizierten Bitumenbindemittels gemäß einem der Ansprüche 1 bis 7 in einer Emulsionsformulierung, die bei Kaltmischgütern oder bei Einfangschichten oder in einer Formulierung für Oberflächenlagen in Form von Emulsionen oder wasserfreien Bindemitteln angewandt werden.

**10.** Verwendung des modifizierten Bitumenbindemittels gemäß einem der Ansprüche 1 bis 7 in industriellen Anwendungen für dichte Abdeckungen, Anstriche oder zur Absatzträgheit.

**Claims**

**1.** A high-cohesion bituminous binder modified with polymers, comprising as base constituents a hard base composed of a bituminous base mixed with a high-viscosity hydrocarbon fraction and a soft aromatic base, **characterised in that** said binder is modified with a polymer of SBS type, incorporated in a proportion of between 3 and 6 % by weight in relation to the total weight of the base constituents, and **in that** it has a maximum cohesion, measured in accordance with the French standard T 66-037, of between 1.8 and 2.6 J/cm$^2$

2. A modified bituminous binder according to claim 1, **characterised in that** it is present in the form of a continuous polymeric phase for a polymer incorporation rate of at least 5 % by weight.

3. A modified bituminous binder according to either claim 1 or claim 2, **characterised in that** it has a penetrability at 25°C of between 40 and 70 tenths of a mm, and a "ball-ring" temperature (BRT) of between 70 and 100°C.

4. A modified bituminous binder according to any one of claims 1 to 3, **characterised in that** the hard base has an asphaltenes content of at least 10 % by weight and a content of protonic aromatic carbons of at least 13 % by weight in relation to the totality of carbons.

5. A modified bituminous binder according to any one of claims 1 to 4, **characterised in** the bituminous base has a penetrability at 25°C of between 0 and 20 tenths of a mm.

6. A modified bituminous binder according to any one of claims 1 to 5, **characterised in that** the high-viscosity hydrocarbon fraction has a kinematic viscosity measured at 170°C of between 20 and 2000 mm$^2$/s, preferably between 100 and 1200 mm$^2$/s, and is incorporated in accordance with a ratio of hydrocarbon fraction/bitumen base of 70/30 by weight.

7. A modified bituminous binder according to any one of claims 1 to 6, **characterised in that** the soft aromatic base has a kinematic viscosity at 100°C of between 17 and 85 mm$^2$/s and it is incorporated at a rate of at least 31 % by weight in relation to the total weight of the base constituents.

8. Use of the modified bituminous binder according to any one of claims 1 to 7, in the formulation of the hot coatings for thin, very thin or ultra thin surface layers, and in the formulation of draining coatings, in particular with high contents of voids.

9. Use of the modified bituminous binder according to any one of claims 1 to 7, in the formulation of emulsions used in cold coatings, in bonding layers or in the formulation of surface coatings in the form of emulsions or anhydrous binders.

10. Use of the modified bituminous binder according to any one of claims 1 to 7, in industrial applications for sealing screeds, paints or for rendering waste materials inert.

FIG.1

Relation rejet-cohésion du liant

FIG.2

Axes: Rejet (g) vs $C_{35}$ (J/cm$^2$)

EP 1 010 729 B1

Relation rejet-cohésion du liant

FIG.3

$C_{35}$ (J/cm$^2$)

Rejet (g)

EP 1 010 729 B1